# EUROPÄISCHE PATENTSCHRIFT

(11) **EP 1 990 657 B1**
(45) Veröffentlichungstag und Bekanntmachung des Hinweises auf die Patenterteilung: **14.09.2011**
(21) Anmeldenummer: 08008457.7
(22) Anmeldetag: 05.05.2008
(51) Int. Cl.: G01S 17/02, G01S 17/08, G01S 7/481

(54) **Optischer Entfernungsmesser**
Optical rangefinder
Appareil de mesure de distances optique

(30) Priorität: 07.05.2007 EP 07009180
(43) Veröffentlichungstag der Anmeldung: 12.11.2008
(73) Patentinhaber: SICK AG, 79183 Waldkirch/Breisgau (DE)
(72) Erfinder: Günther, Andreas, 22941 Bargteheide (DE); Themel, Helmut, 79183 Waldkirch (DE)
(74) Vertreter: Manitz, Finsterwald & Partner GbR

(56) Entgegenhaltungen:
- EP-A- 0 484 064
- EP-A2- 0 402 044
- JP-A- 7 123 048
- US-A- 4 224 583
- US-A- 5 612 779
- US-A1- 2004 157 575
- US-B1- 7 050 724
- US-B2- 7 030 968

## Beschreibung

Die vorliegende Erfindung betrifft einen optischen Entfernungsmesser mit einem Lichtsender zum Aussenden von Messlicht in einen Überwachungsraum, einem Lichtempfänger zum Empfang von durch ein Objekt im Überwachungsraum reflektiertem bzw. remittiertem Messlicht und zur Erzeugung eines elektrischen Ausgangssignals und einer Auswerteschaltung, die mit dem Lichtempfänger verbunden ist, um aus dessen Ausgangssignal die Laufzeit des Messlichtes zu bestimmen und daraus die Entfernung des Objektes abzuleiten. Die Erfindung betrifft weiterhin ein entsprechendes Entfernungsmessverfahren.

Solche optischen Entfernungsmesser bestimmen den Abstand eines Objektes aus der Laufzeit des Messlichtes unter Berücksichtigung der Lichtgeschwindigkeit und werden daher auch als Time-of-Flight-Detektoren (TOF-Detektoren) bezeichnet.

Das ausgesendete Messlicht kann aus einzelnen Lichtpulsen bestehen, deren Laufzeit ausgemessen wird (Pulse-Time-of-Flight-Verfahren). Solche Verfahren sind zum Beispiel in DE 10 2004 031 024 B4, DE 43 40 756 A1 oder EP 0 793 115 B1 beschrieben. Andere Verfahren verwenden moduliertes, kontinuierliches Licht (Continuous-Wave-Time-of-Flight-Verfahren), wie es in EP 0 747 727 B1 oder EP 1 262 906 B1 beschrieben ist, wobei die Phasenverschiebung des Empfangslichtes gegenüber dem ausgesendeten Licht ausgewertet wird.

Für die Zwecke des vorliegenden Textes wird der Begriff "Licht" nicht nur für sichtbares Licht verwendet, sondern kann auch elektromagnetische Strahlung in anderen Frequenzbereichen bezeichnen (zum Beispiel infrarote oder ultraviolette Strahlung).

Zur Abstandsermittlung können eindimensionale Abstandstaster verwendet werden, bei denen das Messlicht in einer Richtung ausgesendet und detektiert wird. Ein drehbarer bzw. schwenkbarer Ablenkspiegel, wie er z.B. in EP 0 793 115 B1 beschrieben ist, kann eingesetzt werden, um einen zwei- oder dreidimensionalen Überwachungsbereich zu erzeugen.

Der Lichtempfänger muss in der Lage sein, schwache Empfangssignale ausreichend genau zu detektieren, um auch den Abstand zu Objekten mit geringer Reflektivität bzw. Remittivität korrekt zu bestimmen. Dies erfordert eine hohe Eingangsempfindlichkeit der Auswerteschaltung, die gewöhnlich unter Einsatz eines Vorverstärkers erreicht wird. Hingegen erzeugen Objekte mit hoher Reflektivität bzw. Remittivität am Lichtempfänger starke Empfangssignale mit sehr hoher Amplitude, die den Vorverstärker der Auswerteschaltung übersteuern können und damit dazu führen, dass die Auswerteschaltung mit einem verzerrten Signal arbeitet.

So kann das im elektrooptischen Wandler gewandelte elektrische Signal innerhalb des Arbeitsbereiches des Sensors einen Dynamikbereich von z.B. über 80dB erreichen, wohingegen die in der Regel an die geringste Signalstärke angepasste elektronische Signalaufbereitung im allgemeinen einen wesentlich geringeren Dynamikumfang hat. Eine bei höheren Signalstärken resultierende drastische Übersteuerung kann dann bei der nachfolgenden Signalauswertung zu erheblichen Fehlern führen.

Bekannte Sensoren begegnen diesem grundsätzlichen Problem auf unterschiedliche Weise:

Die in DE 43 40 756 A1 offenbarte Laserabstandsermittlungsvorrichtung ermittelt den Spitzenwert des empfangenen Lichtpulses und nimmt anhand der Amplitude Laufzeitkorrekturen vor. Der in der Regel im Vergleich mit der in der Praxis auftretenden Signaldynamik begrenzte lineare Verstärkungsbereich einer dem optoelektronischen Photoempfänger in der Regel nachgeschalteten Auswertestufe kann jedoch zu Laufzeitmessfehlern führen, so dass die Kompensation in Abhängigkeit von dem gemessenen Spitzenwert nur in einem relativ kleinen Aussteuerungsbereich verwendet werden kann.

DE 10 2004 031 024 B4 offenbart einen optischen Sensor, der den Scheitelpunkt eines empfangenen Lichtpulses durch zwei Laufzeitmessungen ermittelt. Dazu werden die Zeitpunkte gemessen, an denen ein Empfangslichtpuls einen Schwellwert über- und wieder unterschreitet. Daraus wird ein Mittelwert gebildet, der den Zeitpunkt des Scheitelpunkts annähert, welcher der Berechnung des Abstands zugrunde gelegt wird. Bei einer Übersteuerung der elektronischen Verarbeitungsstufe wird zusätzlich ein Korrekturwert verwendet, dessen Größe von der gemessenen Empfangslichtpulsbreite abhängt.

Eine in EP 0 793 115 B1 offenbarte Laserabstandsermittlungsvorrichtung bestimmt die während des Empfangs über den Fotodetektor fließende elektrische Ladung bzw. die Pulsbreite des empfangenen Lichtpulses vor der Signalauswertung und führt eine Laufzeitmessfehlerkompensation anhand dieser Werte durch.

US 5,612,779 beschreibt einen optischen Entfernungsmesser mit einem Lichtsender, einem Lichtempfänger und einer Auswerteschaltung, die mit dem Lichtempfänger verbunden ist, um aus dessen Ausgangssignal die Laufzeit des Messlichtes zu bestimmen und daraus die Entfernung des Objektes abzuleiten. Die Auswerteschaltung beinhaltet eine als Transimpedanzverstärker bezeichnete Schaltung.

US 7,050,724 beschreibt einen optischen Empfänger mit einer Auswerteschaltung, die einen aus einem invertierenden Spannungsverstärker und einem Rückkopplungswiderstand aufgebauten Transimpedanzverstärker aufweist, dessen Rückkopplungszweig durch eine Steuereinheit und eine pin-Diode erweitert ist.

In US 7 030 968 B2 ist eine Vorrichtung zur dreidimensionalen Aufnahme einer Szene offenbart, bei der ein Strom von einer Photodiode über einen Transimpedanzverstärker in eine Spannung umgewandelt wird, welche anschließend von einer programmierbaren Spannungsabschwächungsschaltung gedämpft wird.

Zur Erweiterung des Dynamikbereichs eines optischen Empfängers verwendet JP 07 123048 A eine pin-Diode, die über einen Kondensator parallel zu einer Last an einer Photodiode geschaltet ist.

Eine in US 4 224 583 A offenbarte Dämpfungsschaltung verwendet eine Kombination von pin-Dioden, deren Dämpfungsverhalten durch eine Gleichstromquelle einstellbar ist. Das zu dämpfende Signal wird über einen Kondensator an die pin-Diodenkombination geleitet und entsprechend der Gleichstromquelle gedämpft.

Desweiteren kann eine nichtlineare Amplitudenbegrenzung (Clampingdioden) des Empfangssignals verwendet werden, um einer Übersteuerung der elektronischen Signalauswertung vorzubeugen, wodurch jedoch weitere zu kompensierende Fehler entstehen können.

Andere Lösungen verwenden z.B. elektromechanisch einstellbare optische Dämpfungselemente vor dem Lichtempfänger, die die optische Entfernungsmessung allerdings verlangsamen.

Schließlich ist die Anpassung der Sendeleistung des ausgesendeten Messlichts benannt, um die Übersteuerung der Signalauswertung zu vermeiden. Aufgrund eingeschränkter Verstellmöglichkeiten des Lichtsenders bietet dieser Ansatz jedoch oftmals nicht den gewünschten Dynamikbereich.

Bei anderen Verfahren wird der Signalauswertungspfad mit veränderbaren Verstärkungen ausgelegt, um den Dynamikumfang der Auswerteschaltung zu erhöhen. Dabei muss wiederum darauf geachtet werden, dass die erste Stufe der Signalauswertung nicht übersteuert wird.

Die bekannten Lösungen erfordern zudem einen erheblichen Kalibrier- bzw. Teach-In-Aufwand.

Es ist die Aufgabe der Erfindung, einen optischen Entfernungsmesser bzw. ein Entfernungsmessverfahren anzugeben, die unter Verwendung eines Time-of-Flight-Verfahrens eine möglichst genauc Entfernungsmessung mit möglichst geringem Kalibricrungsaufwand ermöglichten.

Zur Lösung dieser Aufgabe ist ein optischer Entfernungsmesser mit den Merkmalen des Anspruchs 1 sowie ein Verfahren nach Anspruch 9 vorgesehen. Vorteilhafte Ausführungsformen und zweckmäßige Weiterbildungen der Erfindung sind in Unteransprüchen beschrieben.

Ein erfindungsgemäßer optischer Entfernungsmesser weist zwischen dem Lichtempfänger und der Auswerteschaltung eine pin-Dioden-Schaltung mit mindestens einer pin-Diode auf. Das aus dem Überwachungsraum zurückreflektierte oder -remittierte Messlicht wird von dem Lichtempfänger aufgenommen und in ein elektrisches Strom-Ausgangssignal umgeformt, das zu der pin-Dioden-Schaltung weitergeleitet wird. Die pin-Dioden-Schaltung dämpft dieses Ausgangssignal, bevor es an die Auswerteschaltung weitergeleitet wird. Das Strom-Ausgangssignal des Lichtempfängers besteht in der Regel aus einem oder mehreren Strompulsen.

pin-Dioden umfassen einen n-dotierten und einen p-dotierten Halbleiterbereich mit einem dazwischen liegenden eigenleitenden (engl.: intrinsic) Bereich. Ihr Hochfrequenzwiderstand ist durch die Größe eines aufgeprägten Gleichstromes einstellbar. pin-Dioden sind besonders geeignet, insbesondere auch mit hohen Pulsströmen bei einem typischen Signalspektrum im GHz-Bereich umzugehen, ohne einen sich an den Lichtempfänger anschließenden Signalpfad kapazitiv zu belasten.

Mit der pin-Dioden-Schaltung kann die Amplitude des elektrischen Strom-Ausgangssignals des Lichtempfängers nahezu ohne Verzögerung und ohne Verzerrung soweit gedämpft werden, dass die elektronische Signalauswertung der nachfolgenden Auswerteschaltung nicht übersteuert wird. Somit kann auf die voranstehend erwähnten aufwändigen Kompensationsverfahren weitgehend verzichtet werden und die Kalibrierung lässt sich stark vereinfachen.

Signalverzerrungen durch Übersteuerungen werden verhindert, so dass die Signalform trotz Dämpfung unverfälscht an die folgenden Signalauswertungseinheiten übergeben wird.

Eine bevorzugte Ausführungsform der Erfindung verwendet einen Analog/ Digital-Wandler in der Auswerteschaltung, um das gedämpfte Empfangssignal und vorzugsweise auch ein von dem ausgesendeten Messlicht abgeleitetes Referenzsignal in einen Digitalwert hoher Auflösung zu überführen, wodurch eine sehr genaue Zeitbestimmung ermöglicht wird.

Bei einer bevorzugten Weiterbildung wird zum Beispiel als eine erste Stufe der Auswerteschaltung ein Transimpedanzverstärker eingesetzt. Damit wird das von dem Lichtempfänger über die pin-Dioden-Schaltung geleitete Stromsignal in ein Spannungssignal umgewandelt, das von nachfolgenden Komponenten der Auswerteschaltung verwendet wird.

Bei der Erfindung wird/werden als Messlicht ein oder mehrere Lichtpulse ausgesendet. Die reflektierten bzw. remittierten Lichtpulse werden im Lichtempfänger in elektrische Signale umgeformt und in der Auswerteschaltung z.B. mit von den ursprünglich ausgesendeten Messlichtpulsen abgeleiteten Referenzpulsen verglichen, um aus der Verzögerung die Pulslaufzeit und daraus mit Hilfe der Lichtgeschwindigkeit den Objektabstand zu ermitteln.

Die Erfindung verwendet eine pin-Dioden-Schaltung mit mindestens einer pin-Diode, die mit HF-Masse (Hochfrequenzmasse) verbunden ist. Außerdem kann sie mit dem vom Lichtempfänger weitergeleiteten elektrischen Empfangssignal verbunden sein. Über eine zusätzliche Schaltung kann z.B. mit einer regelbaren Gleichstromquelle ein Gleichstrom durch die mindestens eine pin-Diode vorgegeben werden, der den Widerstandswert der pin-Diode im Hochfrequenzbereich bestimmt. Die Schaltung wirkt somit wie ein Lastwiderstand im Hochfrequenzbereich, der die Stromamplitude des elektrischen Empfangssignals einstellbar dämpft. Es können auch mehrere parallelgeschaltete pin-Dioden mit jeweiligen Widerständen verwendet werden, um den Dynamikbereich der Dämpfungsschaltung zu erweitern.

Bevorzugte Ausführungsformen verwenden in der pin-Dioden-Schaltung eine Schottky-Diode, die zwischen die wenigstens eine Gleichstromquelle und die mindestens eine pin-Diode geschaltet ist. Zudem kann bei derartigen Ausführungsformen ein Verbindungspunkt zwischen der Gleichstromquelle und der Schottky-Diode vorgesehen sein, an dem ein mit HF-Masse gekoppelter Kondensator angeschlossen ist.

Im durchgeschalteten Zustand weist die Schottky-Diode einen geringen Widerstand auf und wirkt dann zusammen mit dem Kondensator, der mit HF-Masse verbunden ist, als ein zusätzliches Dämpfungselement zu der mindestens einen pin-Diode.

Die Erfindung betrifft außerdem ein Verfahren zur optischen Entfernungsmessung gemäß Anspruch 9, bei dem Messlicht in einen Überwachungsbereich ausgesendet wird und das gegebenenfalls von einem Objekt reflektierte oder remittierte Messlicht mit Hilfe eines Lichtempfängers empfangen und in ein elektrisches Strom-Ausgangsignal umgewandelt wird. Vor der Auswertung mit Hilfe einer Auswerteschaltung zur Bestimmung des Abstandes des optischen Entfernungsmessers zu dem Objekt wird das elektrische Ausgangssignal des Lichtempfängers mit Hilfe einer pin-Dioden-Schaltung gedämpft.

Vorteile des erfindungsgemäßen Verfahrens, besondere Ausgestaltungen des erfindungsgemäßen Verfahrens und deren Vorteile ergeben sich aus den oben geschilderten Ausführungsformen des erfindungsgemäßen optischen Entfernungsmessers.

Insbesondere sieht eine Weiterbildung des erfindungsgemäßen Verfahrens vor, dass eine oder mehrere regelbare Gleichstromquellen eingesetzt werden, um die Diode bzw. die Dioden der pin-Dioden-Schaltung mit einem Gleichstrom zu beaufschlagen. Durch Einstellung des Gleichstromes auf einen gewünschten Wert kann der Widerstand der Diode bzw. der Dioden festgelegt werden, wodurch die Dämpfung des elektrischen Strom-Ausgangssignales des Lichtempfängers bestimmt wird. So lässt sich eine Übersteuerung der Auswerteschaltung verhindern.

Die benötigte Dämpfung der pin-Dioden-Schaltung, d.h. insbesondere der einzustellende Stromwert der einstellbaren Gleichstromquelle(n), kann durch Vorversuche ermittelt werden. Dies kann beispielsweise durch einen Einlernprozess bzw. mittels eines Testdurchlaufs erfolgen, anhand dessen die Auswerteschaltung die aktuelle Übersteuerung ermittelt und z.B. über eine integrierte Steuerschaltung die entsprechenden Werte geeignet einstellt, so dass die angeschlossene Auswerteschaltung nicht mehr übersteuert wird.

Alternativ erfolgt die Ansteuerung der pin-Diode bzw. der pin-Dioden iterativ während des Messvorganges.

Die Erfindung wird nachfolgend unter Bezugnahme auf die Zeichnungen erläutert. In diesen zeigen:
- Fig. 1: den schematischen Aufbau eines Empfangssignalpfades eines erfindungsgemäß ausgestalteten optischen Entfernungsmessers;
- Fig. 2: ein Prinzipschaltbild einer pin-Dioden-Schaltung einer ersten Ausführungsform;
- Fig. 3: ein Prinzipschaltbild einer pin-Dioden-Schaltung einer weiteren Ausführungsform;
- Fig. 4: vom Analog/ Digital-Wandler abgetastete Signale eines Referenzpulses und eines zugehörigen Empfangspulses;
- Fig. 5: ein Prinzipschaltbild einer pin-Dioden-Schaltung einer Ausführungsform unter Verwendung einer zusätzlichen Schottky-Diode.

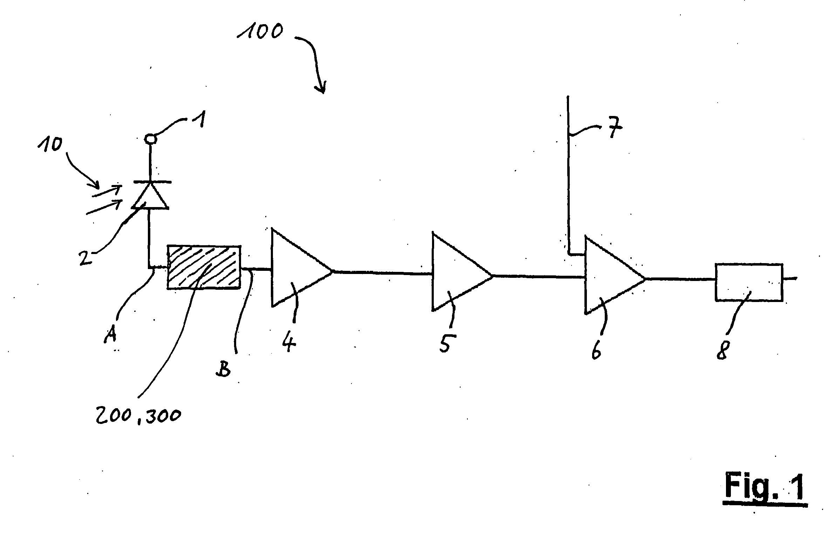

Der in Fig. 1 dargestellte Empfangssignalpfad 100 eines optischen Entfernungsmessers für das Pulse-Time-of-Flight-Verfahren umfasst eine Gleichspannungsquelle 1 zur Versorgung des Lichtempfängers, der in diesem Beispiel eine Lawinen-Photodiode 2 umfasst. Bei Einfall eines von einem (nicht dargestellten) Objekt in einem (nicht dargestellten) Überwachungsraum reflektierten bzw. remittierten Messlichtpulses 10 erzeugt die Lawinen-Photodiode 2 ein Stromsignal, das von der pin-Dioden-Schaltung 200, 300 aufgenommen und gedämpft wird, wie es weiter unten näher erläutert wird.

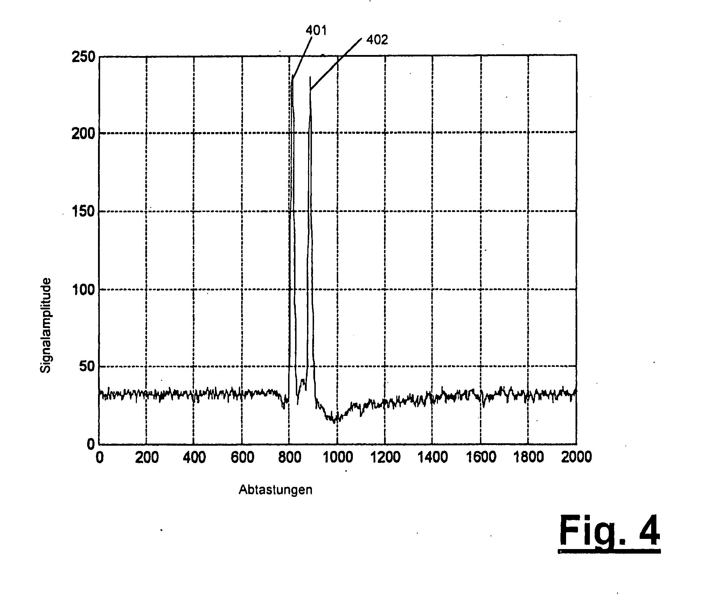

Das gedämpfte Stromsignal wird an eine erste Verarbeitungsstufe weitergeleitet, die im Beispiel durch einen Transimpedanzverstärker 4 gebildet ist. Von diesem wird das Signal als Spannungssignal an einen Summierer 6 weitergegeben. Zwischen dem Transimpedanzverstärker 4 und dem Summierer 6 kann ein Verstärker 5 mit einstellbarem Verstärkungsfaktor vorgesehen sein. Der Summierer 6 addiert einen Referenzpuls 7, der von dem in den Überwachungsraum ausgesendeten Messlichtpuls als Referenzstartpunkt abgeleitet ist. Das Ausgangssignal des Summierers 6 wird an einen Analog/Digital-Wandler 8 gegeben, der die Pulssignale in digitale Werte umformt, so dass sie zum Beispiel von einem (nicht dargestellten) Rechner ausgewertet werden können. Das Eingangssignal des Analog/Digital-Wandlers ist in Fig. 4 gezeigt und besteht aus dem Peak 401, der dem Referenzpuls 7 entspricht, und dem Peak 402, der dem Empfangssignal entspricht.

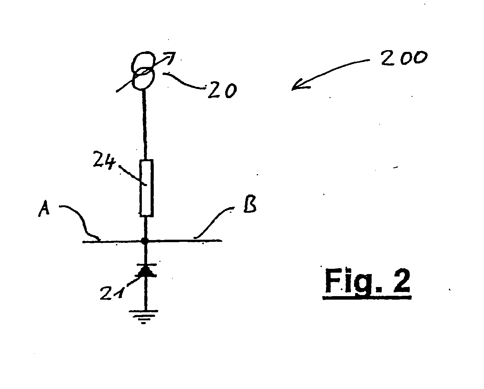

Fig. 2 zeigt eine erste Ausführungsform 200 der pin-Dioden-Schaltung. Die Verbindung A kommt vom Stromausgang des Lichtempfängers 2, während die Verbindung B zum Stromeingang des Transimpedanzverstärkers 4 führt. Die Schaltung umfasst hier eine pin-Diode 21, die einerseits mit HF-Masse und andererseits mit dem Signalpfad verbunden ist. Eine einstellbare Gleichstromquelle ist über ein Impedanzkoppelglied 24 ebenfalls mit dem Signalpfad verbunden. Bei hohen Frequenzen wirkt die pin-Diode im Wesentlichen wie ein Widerstand mit veränderlichem Widerstandswert, wobei der Widerstandswert durch den von der Stromquelle 20 eingeprägten Gleichstrom vorgegeben wird.

Bei einer nicht gezeigten alternativen Ausführungsform der pin-Dioden-Schaltung sind drei parallel geschaltete pin-Dioden vorgesehen, die über entsprechende Impedanzkoppelglieder mit einstellbaren Gleichstromquellen verbunden sind. Auch hier kommt eine Verbindung vom Stromausgang des Lichtempfängers und eine Verbindung führt zum Transimpedanzverstärker . Das Wirkprinzip dieser Schaltung ähnelt dem der Ausführungsform der Fig. 2, wobei durch die Kaskadierung der Dynamikbereich erhöht wird. Selbstverständlich kann auch eine andere Anzahl von pin-Dioden vorgesehen sein, um einen den Anforderungen entsprechenden Dynamikbereich zu erhalten.

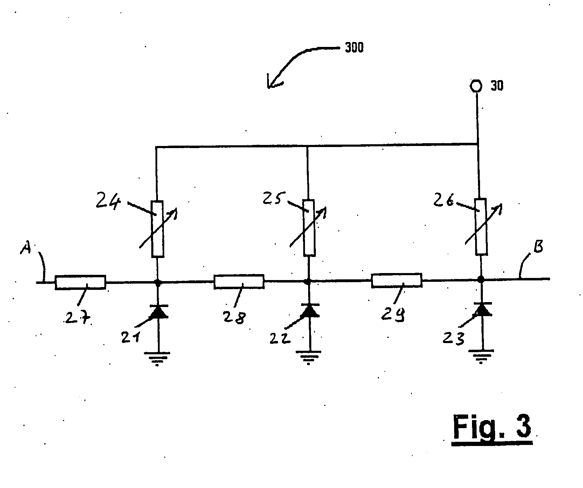

In einer in Fig. 3 gezeigten Ausführungsform 300 sind die mehreren pin-Dioden 21, 22, 23 über entsprechende variable Impedanzkoppelglieder 24, 25, 26 hingegen mit einer gemeinsamen Gleichspannungsquelle 30 verbunden.

Die oben beschriebenen Ausführungsformen werden wie folgt eingesetzt.

In an sich bekannter Weise wird ein Lichtpuls in einen zu überwachenden Überwachungsraum gesendet. Die dazu verwendete und hier nicht gezeigte Lichtquelle ist ortsnah zu der in Figur 1 gezeigten Empfangsschaltung angeordnet und bildet insbesondere zusammen mit dieser in an sich bekannter Weise eine integrale Einheit.

Ein im Überwachungsraum befindliches Objekt reflektiert oder remittiert den Lichtpuls, der als Empfangslichtpuls 10 von der Lawinendiode 2 empfangen wird. Das von der Lawinendiode 2 erzeugte elektrische Strom-Ausgangssignal wird zur pin-Dioden-Schaltung 200, 300 weitergeleitet.

Das pulsförmige Strom-Ausgangssignal (im Folgenden auch als "elektrischer Strom-Empfangspuls" bezeichnet) wird durch die pin-Diode 21 (Figur 2) bzw. pin-Dioden 21, 22, 23 (Figur 3) teilweise gegen HF-Masse abgeleitet. Der auf diese Weise energetisch verringerte elektrische Strom-Empfangspuls wird durch den Transimpedanzverstärker 4 in ein Spannungssignal gewandelt. Durch die Dämpfung des elektrischen Strom-Empfangspulses mit Hilfe der vorgeschalteten pin-Dioden-Schaltung 200, 300 ist gewährleistet, dass der Transimpedanzverstärker 4 nicht übersteuert wird.

Das Spannungs-Ausgangssignal des Transimpedanzverstärkers 4 wird über einen einstellbaren Verstärker 5 zu einem Summierer 6 geleitet. Hier wird am Eingang 7 ein von dem in den Überwachungsraum ausgesendeten Messlichtpuls abgeleiteter Referenzpuls eingespeist, der dem Spannungssignal hinzuaddiert wird.

Das entstehende Signal ist in Figur 4 gezeigt. Es sind Kurven dargestellt, die über den Analog/ Digital-Wandler 8 abgetastet wurden. Der Peak 401 entspricht dem von dem in den Überwachungsraum ausgesendeten Messlichtpuls abgeleiteten Referenzpuls. Der Peak 402 entspricht dem von der Lawinendiode 2 empfangenen und gegenüber dem ausgesendeten Messlichtpuls zeitlich versetzten Empfangslichtpuls 10, der nach Umwandlung in ein elektrisches Signal mit einer erfindungsgemäß vorgesehenen pin-Dioden-Schaltung 200, 300 gedämpft wurde. Die beiden Peaks weisen nahezu identische Amplitudenhöhen und Kurvenformen auf und können daher sehr genau ausgewertet werden. Es wird deutlich, dass das empfangene Signal durch die pin-Dioden-Schaltung derart gedämpft wurde, dass es ohne nichtlineare Verzerrung/Begrenzung im Dynamikbereich der Signalauswertung liegt.

Das Signal wird mit Hilfe des Analog/Digital-Wandlers 8 in ein digitales Signal umgewandelt.

Aus dem Abstand der Pulse lässt sich die Lichtlaufzeit im Überwachungsbereich berechnen. Mit Hilfe der Lichtgeschwindigkeit lässt sich daraus schließlich der Abstand des Objektes von dem optischen Entfernungsmesser bestimmen (Abstand = Lichtgeschwindigkeit * Laufzeit / 2). Diese Berechnungen und Bestimmungen können z.B. mit einem geeigneten Prozessor automatisch durchgeführt werden.

Zur Abstimmung der Dämpfung der pin-Dioden-Schaltung können zum Beispiel ein oder mehrere Vorversuche durchgeführt werden. Dabei wird zunächst ohne Dämpfung die Größe der Übersteuerung bestimmt, aus der sich der für die gewünschte Dämpfungswirkung geeignete Widerstand der pin-Dioden bestimmen lässt. Daraus lässt sich der notwendige Gleichstrom durch die pin-Dioden ermitteln. Alternativ kann der jeweils einzustellende Stromwert während der Messung iterativ bestimmt werden.

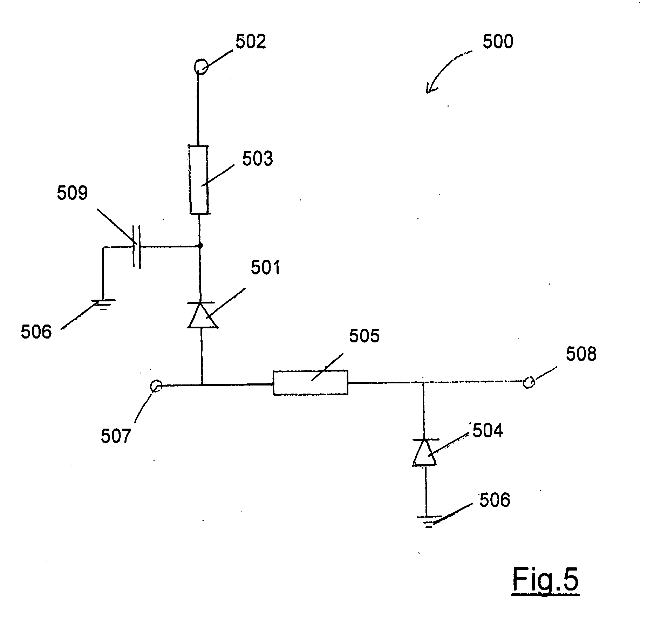

Das in Fig. 5 gezeigte Prinzipschaltbild zeigt eine vereinfachte Darstellung einer pin-Dioden-Schaltung 500 mit einer zusätzlichen Schottky-Diode 501, die zwischen eine Gleichstromquelle, die im gezeigten Beispiel von einer Gleichspannungsquelle 502 zusammen mit einem Widerstand 503 gebildet wird, und die pin-Diode 504 geschaltet ist. Von der Gleichspannungsquelle 502 wird eine Gleichspannung geliefert, die über den Widerstand 503 zu einem durch den Widerstand begrenzten Gleichstrom umgeformt wird, der durch die Schottky-Diode 501, einen weiteren Widerstand 505 und durch die pin-Diode 504 fließt, sofern die Schottky-Diode in Durchlassrichtung betrieben wird. Wenn die Gleichspannungsquelle bei einem positiven Potential oder einem Null-Potential bezüglich der HF-Masse 506 betrieben wird, dann sperrt die Schottky-Diode 501 und es fließt kein Gleichstrom durch die pin-Diode, so dass ein am Anschluss 507 ankommender Strompuls von der (nicht gezeigten) Photodiode nahezu ungedämpft durch die pin-Dioden-Schaltung 500 läuft und an den Anschluss 508 gelangt, der beispielsweise zu einem Transimpedanzwandler führt.

Wenn die Gleichspannungsquelle 502 jedoch mit einer negativen Spannung betrieben wird, die groß genug ist, um die Schottky-Diode durchzuschalten, fließt ein Gleichstrom durch die pin-Diode 504, wodurch eine Dämpfung der pin-Dioden-Schaltung 500 erreicht wird. Da die Schottky-Diode 501 im durchgeschalteten Zustand einen sehr geringen Widerstand aufweist und sie zudem aufgrund ihres Aufbaus zu den "schnellen" Dioden zählt, d.h. den Dioden, die auf hochfrequente Signaländerungen schnell reagieren, wird sie einen am Anschluss 507 ankommenden Strompuls zusätzlich dadurch dämpfen, dass sie einen Teil der Ladung des Strompulses über den Kondensator 509 an die HF-Masse 506 ableitet.

Somit verstärkt ein Einsatz von Schottky-Dioden bei der erfindungsgemäßen pin-Dioden-Schaltung den gewünschten Dämpfungseffekt zusätzlich.

Die erfindungsgemäße Anordnung mit einer pin-Dioden-Schaltung kann vorteilhaft sowohl bei eindimensionalen als auch bei mehrdimensionalen Entfernungsmessern eingesetzt werden.

Mit der erfindungsgemäßen Anordnung ist die besonders einfache und genaue Auswertung eines Signals mit Hilfe eines Analog/ Digitalwandlers in Form eines Spannungssignals möglich, wobei vom Empfänger zunächst ein Stromsignal zur Verfügung gestellt wird. Trotzdem wird die sich anschließende leicht zur Übersteuerung neigende elektronische Signalauswertung (insbesondere z.B. ein Strom/Spannungswandler bzw. Transimpedanzverstärker) dank der Dämpfung durch die zwischengeschaltete pin-Dioden-Schaltung nicht übersteuert.

### Bezugszeichenliste

- 1: Gleichspannungsquelle
- 2: Photodiode
- 4: Transimpedanzverstärker
- 5: einstellbarer Verstärker
- 6: Summierer
- 7: Referenzpulseingang
- 8: Analog/Digital-Wandler
- 10: reflektiertes Messlicht
- 20: einstellbare Gleichstromquelle
- 21, 22, 23: pin-Diode
- 24, 25, 26: Impedanz-Koppelglied
- 27, 28, 29: Widerstand
- 30: Gleichspannungsquelle
- 100: Empfangssignalpfad
- 200, 300: pin-Dioden-Schaltung
- 401: Referenzpuls
- 402: Empfangspuls
- 500: pin-Dioden-Schaltung
- 501: Schottky-Diode
- 502: Gleichspannungsquelle
- 503, 505: Widerstand
- 504: pin-Diode
- 506: HF-Masse
- 507, 508: Anschlüsse
- 509: Kondensator

- A, B: Verbindungen

## Patentansprüche

1. Optischer Entfernungsmesser mit
einem Lichtsender zum Aussenden von Messlicht in einen Überwachungsraum,
einem Lichtempfänger (2) zum Empfang von durch ein Objekt im Überwachungsraum reflektiertem bzw. remittiertem Messlicht und zur Erzeugung eines elektrischen Ausgangssignals und
einer Auswerteschaltung, die mit dem Lichtempfänger verbunden ist, um aus dessen Ausgangssignal die Laufzeit des Messlichtes zu bestimmen und daraus die Entfernung des Objektes abzuleiten,
wobei der Lichtsender zum Aussenden von pulsförmigem Messlicht und die Auswerteschaltung zur Bestimmung des Objektabstandes aus der Pulsverzögerung ausgestaltet sind,
**gekennzeichnet durch**
eine zwischen dem Lichtempfänger (2) und der Auswerteschaltung angeordnete und mit diesen elektrisch verbundene pin-Dioden-Schaltung (200, 300, 500) mit mindestens einer pin-Diode (21, 22, 23, 504), wobei die pin-Dioden-Schaltung das StromAusgangssignal des Lichtempfänger dämpft und die pin-Dioden-Schaltung (200, 300, 500) mindestens eine pin-Diode (21, 22, 23, 504) umfasst, die mit HF-Masse verbunden ist.

2. Optischer Entfernungsmesser nach Anspruch 1,
**dadurch gekennzeichnet, dass**
die Auswerteschaltung einen Analog/Digital-Wandler (8) umfasst.

3. Optischer Entfernungsmesser nach Anspruch 1 oder 2,
**dadurch gekennzeichnet, dass**
die Auswerteschaltung einen Transimpedanzverstärker (4) umfasst.

4. Optischer Entfernungsmesser nach zumindest einem der vorstehenden Ansprüche,
**dadurch gekennzeichnet, dass**
die mindestens eine pin-Diode (21, 22, 23, 504) mit wenigstens einer Gleichstromquelle (20) verbunden ist, um einen Gleichstrom durch die mindestens eine pin-Diode (21, 22, 23, 504) festzulegen.

5. Optischer Entfernungsmesser nach Anspruch 4,
**dadurch gekennzeichnet, dass**
die wenigstens eine Gleichstromquelle (20) regelbar ist.

6. Optischer Entfernungsmesser nach zumindest einem der vorstehenden Ansprüche,
**dadurch gekennzeichnet, dass**
die pin-Dioden-Schaltung (200, 300, 500) mehrere parallel geschaltete pin-Dioden (21, 22, 23, 504) umfasst.

7. Optischer Entfernungsmesser nach zumindest einem der vorstehenden Ansprüche,
**dadurch gekennzeichnet, dass**
in der pin-Dioden-Schaltung (500) zwischen die wenigstens eine Gleichstromquelle und die mindestens eine pin-Diode (504) eine Schottky-Diode (501) geschaltet ist.

8. Optischer Entfernungsmesser nach Anspruch 7,
**dadurch gekennzeichnet, dass**
zwischen der wenigstens einen Gleichstromquelle und der Schottky-Diode (501) ein Verbindungspunkt vorgesehen ist, an dem ein mit HF-Masse (506) gekoppelter Kondensator (509) angeschlossen ist.

9. Verfahren zur optischen Entfernungsmessung mit folgenden Schritten:
Aussenden von pulsförmigem Messlicht in einen Überwachungsbereich;
Empfangen von gegebenenfalls von einem Objekt reflektiertem oder remittiertem Messlicht mit Hilfe eines Lichtempfängers und Umwandlung in ein elektrisches Signal;
Dämpfen des elektrischen Strom-Ausgangssignals des Lichtempfängers mit einer pin-Dioden-Schaltung (200, 300, 500) mit mindestens einer pin-Diode (21, 22, 23, 504); und
Auswerten der Lichtlaufzeit des Messlichtes zur Bestimmung der Entfernung des Objektes mit einer Auswerteschaltung,
wobei die pin-Diodenschaltung zwischen dem Lichtempfänger (2) und der Auswerteschaltung angeordnet und mit diesen elektrisch verbunden ist und wenigstens eine pin-Diode (21, 22, 23, 504) umfasst, die mit HF-Masse verbunden ist.

10. Verfahren nach Anspruch 9,
**dadurch gekennzeichnet, dass**
die Einstellung der Dämpfungswirkung der pin-Dioden-Schaltung (200, 300, 500) durch Einstellung eines Gleichstromes durch die pin-Diode (21, 504) bzw. pin-Dioden (21, 22, 23) vorgenommen wird.

11. Verfahren nach Anspruch 10,
**dadurch gekennzeichnet, dass**
der jeweilige Gleichstrom durch Vorversuche derart ermittelt wird, dass das elektrische Signal derart gedämpft wird, dass eine Auswerteschaltung zur Auswertung des Lichtempfangssignales nicht übersteuert wird.

## Claims

1. An optical range finder comprising
a light transmitter for the transmission of measurement light into a monitored space;
a light receiver (2) for the reception of measurement light reflected or remitted by an object in the monitored space and for the generation of an electrical output signal; and
an evaluation circuit which is connected to the light receiver to determine the time of flight of the measurement light from its output signal and to derive the distance of the object from it,
wherein the light transmitter is designed for the transmission of pulsed measurement light and the evaluation circuit is designed for the determination of the object distance from the pulse delay,
**characterized by**
a PIN diode circuit (200, 300, 500) arranged between the light receiver (2) and the evaluation circuit and electrically connected thereto having at least one PIN diode (21, 22, 23, 504), with the PIN diode circuit damping the current output signal of the light receiver and with the PIN diode circuit (200, 300, 500) including at least one PIN diode (21, 22, 23, 504) which is connected to RF ground.

2. An optical range finder in accordance with claim 1, **characterized in that** the evaluation circuit includes an analog/digital converter (8).

3. An optical range finder in accordance with claim 1 or claim 2, **characterized in that** the evaluation circuit includes a transimpedance amplifier (4).

4. An optical range finder in accordance with at least one of the preceding claims, **characterized in that** the at least one PIN diode (21, 22, 23, 504) is connected to at least one DC current source (20, 30, 40) to set a DC current through the at least one PIN diode (21, 22, 23, 504).

5. An optical range finder in accordance with claim 4, **characterized in that** the at least one DC current source (20) can be regulated.

6. An optical range finder in accordance with at least one of the preceding claims 1, **characterized in that** the PIN diode circuit (200, 300, 500) includes a plurality of PIN diodes (21, 22, 23, 504) connected in parallel.

7. An optical range finder in accordance with at least one of the preceding claims, **characterized in that** a Schottky diode (501) is connected in the PIN diode circuit (500) between the at least one DC current source and the at least one PIN diode (504).

8. An optical range finder in accordance with claim 7, **characterized in that** a connection point to which a capacitor (509) coupled to RF ground (506) is connected is provided between the at least one DC current source and the Schottky diode (501).

9. A method for optical range finding comprising the following steps:
transmitting pulsed measurement light into a monitored space;
receiving measurement light reflected or remitted where appropriate by an object with the help of a light receiver and converting into an electrical signal;
damping the electrical current output signal of the light receiver with a PIN diode circuit (200, 300, 500) having at least one PIN diode (21, 22, 23, 504); and
evaluating the time of flight of light of the measurement light for the determination of the distance of the object using an evaluation circuit,
wherein the PIN diode circuit is arranged between the light receiver (2) and the evaluation circuit and is electrically connected thereto and includes at least one PIN diode (21, 22, 23, 504) which is connected to RF ground.

10. A method in accordance with claim 9, **characterized in that** the adjustment of the damping effect of the PIN diode circuit (200, 300, 500) is carried out by setting a DC current through the PIN diode (21, 504) or PIN diodes (21, 22, 23).

11. A method in accordance with claim 10, **characterized in that** the respective DC current is determined by pre-trials such that the electrical signal is damped such that an evaluation circuit for the evaluation of the received light signal is not overloaded.

## Revendications

1. Appareil optique de mesure de distance, comprenant
un émetteur de lumière pour émettre une lumière de mesure dans un espace de surveillance,
un récepteur de lumière (2) pour recevoir une lumière de mesure réfléchie ou réémise par un objet dans l'espace de surveillance et pour engendrer un signal de sortie électrique, et
un circuit d'évaluation, connecté au récepteur de lumière afin de déterminer à partir de son signal de sortie le temps de propagation de la lumière de mesure et de dériver à partir de celui-ci la distance de l'objet,
dans lequel l'émetteur de lumière est conçu pour émettre une lumière de mesure sous forme pulsatoire et le circuit d'évaluation est conçu pour déterminer la distance de l'objet à partir du retard des impulsions,
**caractérisé par**
un circuit à diodes pin (200, 300, 500) agencé entre le récepteur de lumière (2) et le circuit d'évaluation et connecté électriquement à ceux-ci, comprenant au moins une diode pin (21, 22, 23, 504), le circuit à diodes pin amortissant le signal de sortie électrique du récepteur de lumière et le circuit à diodes pin (200, 300, 500) comprenant au moins une diode pin (21, 22, 23, 504) qui est connectée à la masse HF.

2. Appareil optique de mesure de distance selon la revendication 1,
**caractérisé en ce que** le circuit d'évaluation comprend un convertisseur analogique/numérique (8).

3. Appareil optique de mesure de distance selon la revendication 1 ou 2,
**caractérisé en ce que** le circuit d'évaluation comprend un amplificateur à transimpédance (4).

4. Appareil optique de mesure de distance selon l'une au moins des revendications précédentes,
**caractérisé en ce que** ladite au moins une diode pin (21, 22, 23, 504) est connectée à au moins une source à courant continu (20) pour imposer un courant continu à travers ladite au moins une diode pin (21, 22, 23, 504).

5. Appareil optique de mesure de distance selon la revendication 4,
**caractérisé en ce que** ladite au moins une source à courant continu (20) est susceptible d'être régulée.

6. Appareil optique de mesure de distance selon l'une au moins des revendications précédentes,
**caractérisé en ce que** le circuit à diodes pin (200, 300, 500) comprend plusieurs diodes pin (21, 22, 23, 504) branchées en parallèle.

7. Appareil optique de mesure de distance selon l'une au moins des revendications précédentes,
**caractérisé en ce qu'**une diode Schottky (501) est branchée dans le circuit à diodes pin (500) entre ladite au moins une source à courant continu et ladite au moins une diode pin (504).

8. Appareil optique de mesure de distance selon la revendication 7,
**caractérisé en ce que**, entre ladite au moins une source à courant continu et la diode Schottky (501), il est prévu un point de connexion auquel est raccordé un condensateur (509) couplé à la masse HF (506).

9. Procédé pour la mesure optique de distance, comprenant les étapes suivantes :
on émet une lumière de mesure pulsatoire dans une zone de surveillance ;
on reçoit la lumière de mesure éventuellement réfléchie ou réémise par un objet, à l'aide d'un récepteur de lumière et on la convertit en un signal électrique ;
on atténue le signal de sortie électrique du récepteur de lumière avec un circuit à diodes pin (200, 300, 500) avec au moins une diode pin (21, 22, 23, 504) ; et
on évalue le temps de propagation de la lumière de mesure pour déterminer la distance de l'objet au moyen d'un circuit d'évaluation,
dans lequel le circuit à diodes pin est agencé entre le récepteur de lumière (2) et le circuit d'évaluation et est connecté électriquement à ceux-ci, et comprend au moins une diode pin (21, 22, 23, 504) qui est reliée à la masse HF.

10. Procédé selon la revendication 9,
**caractérisé en ce que** le réglage de l'effet d'atténuation du circuit à diodes pin (200, 300, 500) est exécuté par réglage d'un courant continu à travers la diode pin (21, 504) ou les diodes pin (21, 22, 23).

11. Procédé selon la revendication 10,
**caractérisé en ce que** le courant continu respectif est déterminé par des essais préliminaires de telle façon que le signal électrique est atténué de telle manière qu'un circuit d'évaluation destiné à évaluer le signal de réception de lumière n'est pas saturé.
